# EUROPEAN PATENT SPECIFICATION

(11) **EP 0 726 028 B1**
(45) Date of publication and mention of the grant of the patent: **16.08.2001**
(21) Application number: 96105902.9
(22) Date of filing: 21.06.1989
(51) Int. Cl.: A01N 25/10, A01N 25/34

(54) **Use of a superabsorbent polymer for controlling a population of terrestrial insects or pests**
Verwendung von superabsorbierenden Polymeren zur Bekämpfung terrestrischer Insekten- oder Schädlingspopulationen
Utilisation de polymères superabsorbants pour contrôler une population d'insectes ou d'animaux nuisibles dans un environnement terrestre

(30) Priority: 24.06.1988 US 210792
(43) Date of publication of application: 14.08.1996
(62) Divisional of application: 89907983.4
(73) Proprietor: Stockhausen GmbH & Co. KG, 47805 Krefeld (DE)
(72) Inventor: Levy, Richard, Fort Myers, Florida 33908 (US)
(74) Representative: Kutzenberger, Helga, Dr.

(56) References cited:
- EP-A- 0 050 375
- EP-A- 0 148 170
- EP-A- 0 285 404
- WO-A-85/01736
- GB-A- 1 313 892
- US-A- 3 253 985
- CENTRAL PATENTS INDEX, BASIC ABSTRACTS JOURNAL Week 8520 Derwent Publications Ltd., London, GB; AN 85-120188 XP002020479 & JP-A-60 061 504 (TOKYO ORG. CHEM. IND. K.K.)

## Description

The present invention relates to the use of superabsorbent solid organic polymers which absorb over 100 times their weight in water and which do not contain an insecticidal and/or pesticidal agent for the treatment or pretreatment of active pest breeding areas, provided that mosquitoe breeding areas are excluded. The superabsorbent solid organic polymers may contain additional nontoxic ingredients. The pests are terrestrial pests (mainly insects (excluding mosquitoes) and their close relatives (Arthropoda) as well as rodents (Muridae), nematodes, fungi, mites, birds and weeds)) that are pests of ornamentals and turf, livestock, forest and shade trees, field crops and pastures, fruits and nuts, households, poultry, stored products, vegetables with conventional ground or aerial techniques.

Mode of action will be dependent on the type(s) of polymer(s) to be used, the type of terrestrial habitat to be treated or pretreated, and the species of pest(s).

US-A-4,400,391 and US-A-4,401,456 disclose the use of alginate gel beads to encapsulate bioactive materials to provide for their controlled release. The patents describe beads being made to either float or sink (if used in an aqueous environment) and they may contain herbicides. These beads are also described as acting as carriers to place the bioactive material near the target species, for example, a floating bead containing a herbicide releasing the herbicide in close proximity to floating aquatic weeds or the beads falling through foliage to release herbicide into the soil.

US-A-4,344,857 involves encapsulation by xanthate derivatives. The encapsulation techniques are complicated, costly and quality sensitive.

US-A-3,576,760, to Gould et al., describes a method for entrapping fragrances, detergents, enzymes, food flavors and pesticides in a water soluble polymer. The entrapment is described as accomplished by mutually dissolving the water soluble polymer and the entrapped additive, which are then dried (e.g., spray dried). The primary purpose of this technique is to protect the entrapped species prior to target delivery. The polymers instantly dissolve in water and as such are unsuitable for controlled release. The technique is further limited in the types and quantities of entrapable compounds.

Mueller et al. (US-A-4,304,591) employs an allegedly novel free radical polymerized hydrogel. The ingredients are incorporated into the hydrogel primarily by presence in the polymerization solution, however some medicants are stated as suitably diffused into the matrix via a solvent medium thereafter. This method is limited in both the capacity of the hydrogel matrix and its ability to incorporate diverse, and potentially incompatible agents. The major effective use contemplated for this matrix is the delivery of medicants.

A GB-A-2,108,517, discloses a hydrogel having at least one polymerizable cyclic (thio)ether and at least one hydrophilic homo-or co-polymer. This composition like Mueller et al. is stated as being particularly suited to slow release of medicants, particularly for treatment of tropical diseases.

A relatively new approach to insecticidal and pesticidal delivery has been by application of controlled-release formulations, to varying degrees of success, such as described by Richard W. Baker in Controlled Release of Biologically Active Agents, 1987, Wiley-Interscience Publishing, 279, pp. This text generally describes the use of various controlled release technologies including simple diffusion from monolithic devices such as hydrogels. However, this method is normally limited by hydrogel capacity and difficulties with incorporation of the desired agent, particularly hydrophilic substances. The capacity and incorporation problems with monolithic devices are often addressed by reservoir devices. More complex release mechanism include the use of biodegradable matrix carriers, namely, bonding of active ingredients in heterogeneously or homogeneously degradable polymers, called polyagents. Polyagents may actually be polymers formed of monomers of the active agent. The release mechanics of these controlled release mechanisms are complex, depending on the presence (and strength) or absence of degradable ligand bonds and their location (e.g., as active agent bonds to the polymer), concentration of the active agent and/or dispersant or solvent in the carrier, the relative hydrophobicity or hydrophilicity of the polymer, whether or not the polymer degrades homogeneously or heterogeneously, whether the active agent is in the solid form or liquid form in the polymer, etc. Further formation of such polyagents is complicated and often reagent specific.

EP-A-285404 which is a prior art reference according to Art. 54(3) and (4) EPC is directed to the control of insects with superabsorbent solid organic polymers containing insecticides and to the contrcl of certain species of mosquitoes with superabsorbents solid organic polymers not containing insecticides.

EP-A-50375 is concerned with superabsorbent solid organic polymers which absorb over 100 times their weight of water. The applications of the superabsorbent polymers which absorb over 100 times their weight of water. The applications of the superabsorbent polymers mentioned in said document are the use in hygenic and household articles and the use in the industrial field, for example as water leak stoppers and dehydrating agents, which make good use of the water-swellability of the polymers. Furthermore, EP-A-50375 discloses the use of the superabsorbent polymers as carriers for pesticides, etc.

It is the object of the present invention to provide a method for the ground or aerial treatment of a variety of active pest breeding areas which overcome the problems and deficiencies of the prior art.

This object is achieved by the use of superabsorbent solid organic polymers which absorb over 100 times their weight in water and which do not contain an insecticidal and/or pesticidal agent for the treatment or pretreatment of active pest breeding areas, provided that mosquitoe breeding areas are excluded.

Preferably said superabsorbent polymer comprises a starch graft co-polymer or ter-polymer on a hydrophilic acrylamide, or acrylate polymer, co-polymer or ter-polymer.

Preferably said superabsorbent polymer is selected from the group consisting of: an acrylamidesodium acrylate copolymer; a hydrolyzed starch-polyacrylonitrile; hydrolyzed 2-propenenitrile homo-polymer sodium salt or poly(acrylamide-co-sodium acrylate) or poly(2-propeneamide-co-2-propenoic acid, sodium salt); starch-g-poly(acrylonitrile) or starch-g-poly(acrylamide-co-sodium acrylate), a starch-acrylonitrile copolymer; poly-2-propenoic acid sodium salt; poly(2-propoeneamide-co-2-propenoic acid) sodium salt; starch-g-poly(2-propaneamide-co-2-propenoic acid) potassium salt; starch-g-poly(2-propeneamide-co-2-propenoic acid); starch-g-poly(2-propeneamide-co-2-propenoic acid) sodium salt; cellulosic laminates of poly-2-propenoic acid, sodium salt; crosslinked modified polyacrylamide; or crosslinked acrylics; and mixtures thereof.

Said superabsorbent polymer is preferably in a powder, granule, extruded or flake form or agglomerated into any shape or form, e.g. dense pellets, granules, water soluble pouches, or briquets.

According to the present invention, the superabsorbent polymers are used without insecticidal or pesticidal agents in an agglomerated or nonagglomerated form as a treatment or pretreatment for active pest breeding areas. For example the superabsorbent polymer formulations without active agents can be used as a moisture/water management aid to reduce or eliminate water that is necessary for the area to be treated to become an active pest breeding ground. For example, wet and damp silage and manure are commonly breeding areas for immature stages of flies. As a further application of the present invention it is contemplated that such areas would be treated directly or by use of injection techniques to rapidly remove water from the potential breeding areas. The composition will alter the breeding environment to make it unsuitable for that purpose while preventing the emergence of the adult forms of the immature stages already under development. As a treated medium area dries the polymer will promote the formation of a crust which further inhibits ovipositing insects and the emergence of mature stages under development. This procedure can be used in a number of pest breeding areas requiring moist conditions such as silage and manure pits.

Impregnation or mixing of superabsorbent polymers with fatty alcohols, film-forming agents, surface-active agents, surfactants, or hydrophobic oils appears to delay or slow down the rate of water absorption of superabsorbent polymers.

The superabsorbent polymer(s) used according to the present invention may contain one or more nontoxic adjuvants, diluents, or enhancers, such as carriers, baits, binders, deflocculating agents, fertilizers, penetrants, preservatives, spreading agents, surface active agents, surfactants, suspending agents, wetting agents, stabilizing agents, compatability agents, sticking agents, waxes, oils, inverting oils, co-solvents, coupling agents, foams, antifoaming agents, synthetic plastics, elastomers, synergists, natural or synthetic polymers; and other additives and mixtures thereof.

Certain flowable, variable-viscosity superabsorbent polymer compositions to be used according to the present invention formulated with one or more surface active/film-forming agents, surfactants(s) or oil(s), with or without water can enhance target substrate adherences and minimize wind drift loss.

The solid or flowable compositions of superabsorbent polymer(s) will be suitable with various additive(s) (which are not insecticidal and/or pesticidal agents), which can be directly or indirectly placed in desired terrestrial habitat locations (e.g., indoor or outdoor) to be treated or pretreated based on the type(s) of formulation(s) and insect or pest specie(s). In general the superabsorbent carrier/diluent/encapsulation matrix, particularly when formulated with certain surface-active/film-forming agents, surfactants or oils can provide matrix protection from environmental degradation due to UV, volatilization, oxidation, humidity, microbial attack, temperature fluctuation, etc., even after periods of wetting and drying.

In accordance with the invention an agglomerated or non-agglomerated solid (encapsulated or not encapsulated within a water soluble pouch) or variable-viscosity flowable (aqueous or oil base) the superabsorbent solid organic polymer is applied by ground or aerial techniques (i.e., by aircraft, trucks, etc.) to a variety of terrestrial (i.e., non-aquatic) habitats. The superabsorbent polymer may be applied alone or in combination with water or oil, adjuvant(s), diluent(s), or carrier agent(s), or other additive(s).

The diluent(s), adjuvant(s), carrier agent(s), or other additive(s), if present, is at a concentration adapted to improve formulation component mixing, compatability, and/or stability.

Carrier, adjuvant, or diluent materials are for example selected from surfactants, alcohols, film-forming agents, surface-active agents, petroleum or vegetable-and/or animal-base oils (e.g., an baits) and mixtures thereof.

A particular preferred advantageous application for the above superabsorbent solid organic polymers is against ants (e.g., fire ants) and other similar habitat-related pests. The invention composition can readily incorporate oil-based baits and compatible and non-compatible adjuvants. The superabsorbent polymers are not effective as pesticides in and of themselves. However, the superabsorbent polymers have an extremely hydrodynamic behavior. For example a conventional baited insecticide carrier foraged and brought into an ant colony or mound would require the ants to continually ingest or contact the baited hydrodynamically inactive carrier. With superabsorbent polymers, the extremely hydrodynamic behavior of the matrix will enable the polymer to swell and disrupt the colonies, hence simultaneously increasing worker activity, the surface area of the matrix and hence its presence in the colony. The extremely hydrophilic nature of the polymer enhances this process even absent direct wetting, by enabling swelling by preferential absorption of surrounding subsurface moisture.

Water-activated and biodegradable superabsorbent polymers formulated into an agglomerated or nonagglomerated bait-control agent formulation can be removed from the application site by e.g., foraging insects, and subsequently translocated to mounds or nests for feeding to caste members and broods and/or used as structural building components and integrated directly into the mound or nest.

The solid or flowable superabsorbent polymers to be used according to the present invention may contain one or more nontoxic agents such as surfactants, spreading agents, fertilizers, adjuvants, carriers, binders, deflocculating agents, dispersing agents, synergists, penetrants, suspending agents, baits, sticking agents, wetting agents, stabilizing agents, compatability agents, co-solvents, coupling agents, foams, anti-foaming agents, diluents, waxes, oils, synthetic plastics, elastomers, inverting oils, natural or artificial polymers, and other additives and mixtures thereof; depending on the type or nature of the terrestrial habitat to be treated or pretreated and the environmental impact. The solid or flowable formulations to be used according to the present invention are biodegradable. They are also storage stable when formulated, basically as stable as the individual components; however, increased stability may occur in solid matrix form over the flowable form. Solid or flowable superabsorbent polymer formulations to be used according to the present invention can take a wide variety of shapes, forms, and consistencies which may be required for a particular application.

Additional modifications can be obtained by the encapsulation of solid agglomerated or non-agglomerated compositions within walls (e.g., a pouch) composed of at least one water-soluble and/or biodegradable material selected from the group consisting of polyvinyl alcohol, polyethylene oxide and hydroxy propylmethyl cellulose, with or without cellulosic or paper laminates.

Surface-active/film-forming agents, oils or surfactants can also retard environmental degradation of the polymer matrix.

Superabsorbent polymers, including starch graft co-polymers, are known in the art. See, for example, those described in US-A-4,375,535 and US-A-4,497,930, which have disclosed uses as adhesives, flocculants, sizes, water-retaining materials for agriculture and water-absorbing materials for sanitary materials. However, the spectrum of advantages attendant the use of superabsorbent polymers in solid and flowable terrestrial insecticidal, pesticidal or insecticidal/pesticidal delivery compositions have gone unrecognized.

The superabsorbent polymers used according to the present invention are synthetic organic polymers which are solid and hydrophilic, absorbing over 100 times their weight in water. These superabsorbent polymers are typically in a powder, granule, crystal, extruded, or flake form, adapted to be blended and/or agglomerated into any shape or form.

The superabsorbent polymers may be, for example, acrylamide alkali metal acrylate co-polymers; propenenitrile homo-polymers, hydrolyzed, alkali metal salts; polymers of propeneamide and propenoic acid, alkali metal salts; hydrolyzed acrylonitrile co-polymers, and starch graft co-polymers and ter-polymers thereof. All of these are designed to be hydrophilic, absorbing over 100 times their weight in water. The resulting hydrophilic polymers can absorb from over one hundred to greater than about 5000, more typically around 500 to about 1,000, times their own weight in water (measured using distilled water, pH 7.5, 25°C, 1.013x10⁵ Pa (760 mm Hg), absorption within about 30 seconds). However, the absorption or swelling capacity and absorption or swelling time typically varies with each specific superabsorbent polymer.

One class of superabsorbent polymers include combinations of a starch and organic monomers, oligomers, polymers, co-polymers or ter-polymers. They may be manufactured in a variety of ways, for example, the methods described in US-A-4,375,535 and US-A-4,497,930, and can be, for example, the product of grafting corn starch (amylopectin) with acrylonitrile (an acrylic monomer or oligomer). A second class of superabsorbent polymers includes combinations of acrylamide and acrylate polymers, co-polymers and ter-polymers.

The superabsorbent polymers can also be propenoic or acrylonitrile/acrylamide-base polymers or co-polymers or ter-polymers that also show superabsorbency properties.

It has also been observed that superabsorbent polymers alone, or impregnated, mixed or combined with, water or oil, or other additives (excluding insecticidal and/or pesticidal agent(s)) have the ability to swell when in contact with water and release the impregnated substance(s) at rates that will vary with the type of solid or flowable formulation utilized. Superabsorbent polymers also have the ability under certain conditions to reform or contract to a congealed or crystal-like consistency similar to their original form when evaporation has caused the water to be removed from the sol, gels or gelly-like matrix, and then swell or regel when additional water is added. It has been found that when the superabsorbent polymer is impregnated or mixed with a surface-active/film-forming agent(s), surfactant or oil, water will be absorbed at a slower rate. Also, environmental decomposition of the polymer matrix from UV, microbial decomposition, etc., will be slower than matrices containing no surface active/film-forming agent, surfactant or oils.

Specific examples of superabsorbent polymers with differential swelling properties, include:
1) a co-polymer of acrylamide sodium acrylate (Terra-Sorb® GB);
2) hydrolyzed starch-polyacrylonitrile (Tera-Sorb®) ;
3) 2-propenenitrile, homo-polymer, hydrolyzed, sodium salt or poly (acrylamide-co-sodium acrylate) or poly (2-propeneamide-co-2-propenoic acid, sodium salt), (Water Lock® Superabsorbent Polymer G-100);
4) starch-g-poly (2-propeneamide-co-2-propenoic acid, sodium salt), (Water Lock® Superabsorbent Polymer A-100);
5) starch-g-poly (2-propeneamide-co-2-propenoic acid, Sodium salt), (Water Lock® Superabsorbent Polymer A-200);
6) starch-g-poly (2-propeneamide-co-2-propenoic acid, potassium salt), (Water Lock® Superabsorbent Polymer B-204);
7) poly (2-propeneamide-co-2-propenoic acid, sodium salt), (Water Lock® Superabsorbent Polymer G-400);
8) poly-2-propenoic acid, sodium salt (Water Lock® Superabsorbent Polymer J-500 or Aqua Keep® J-500);
9) sodium polyacrylate superabsorbent polymers (Aqua Keep® J-400 and J-550);
10) starch g-poly (acrylonitrile) or poly ,2-propeneamide-co-sodium acrylate), (General Mills SP 5025);
11) starch acrylonitrile co-polymer (Super Sorb/AG Sorbent);
12) cross-linked modified polyacrylamides (Aquastore® and Aquastore®F);
13) cellulosic laminates of poly-2-propenoic acid, sodium salt (Water Lock® Superabsorbent Laminates L-413, L-415, L-425, L-435, or L-513); and
14) cross-linked acrylics (Aridall® 1078, 1080, 1091, 1125, 1092, or 1098).

Superabsorbent polymers are generally nontoxic biodegradable, and relatively inexpensive to buy or produce.

Surfactants, film-forming/surface-active agents, or oils, useful in solid or flowable formulations used in the present invention as carriers, diluents, adjuvants, release rate modifiers, etc., are generally organic chemicals that are soluble to essentially insoluble in water. They are generally nonionic, nonvolatile and can be liquid, semisolid, or solid; however, they can be anionic or cationic, if necessary. They may have a low freezing point and a boiling point above the maximum air temperature of the environment into which they are placed. Examples of liquid, semisolid, or solid surfactant film-forming or surface-active agents useful in conjunction with the present invention are the organic chemicals described in US-A-4,160,033. Film-forming agents, surfactants, or alcohols such as 2-propanol, tridecyl alcohol, 2-ethyl butanol, 2-ethyl hexanol, 1-hexanol, acetone, sylene, decyl alcohol, polyoxyethylene (20) sorbitan trioleate, polyoxyethylene alkyl aryl ether, polyoxyethylene (5) sorbitan monooleate, isostearyl alcohol containing 10 oxyethylene groups, Morwet^{R} surfactants, isostearyl alcohol containing 20 oxyethylene groups; cetyl alcohol; stearyl alcohol; or petroleum-base oils such as mineral oils, diesel oils and mixtures thereof may also be used.

Various other exemplary surfactants include higher fatty acids, higher alcohol sulfate, alkyl aryl sulfonates, polyoxyethylene alkyl phenol ether, polyoxyethylene alkylamine, polyoxyethylene aklylamide, poly(oxyethylene-oxypropylene) co-polymer and polyoxyethylene-polyoxypropylene alkylene diamine alkyl trimethyl ammonium salt, alkyldimethyl benzylammonium salt, alkylpryidinium salt, alkyl betaine or alkyl imidazoline sulfonate.

Water soluble and/or degradable films or materials useful in the fabrication of pouches, bags, walls, containers, etc., for the encapsulation of solid agglomerated or non-agglomerated compositions are selected from the group consisting of polyvinyl alcohol, polyethylene oxide, and hydroxy propylmethyl cellulose, with or without cellulosic or paper laminates.

Nontoxic adjuvant or diluent materials include water, carriers, baits, binders, fertilizers, deflocculating agents, penetrants, spreading agents, surface-active agents, surfactants, suspending agents, wetting agents, stabilizing agents, compatability agents, waxes, oils, inverting oils, co-solvents, coupling agents, foams, synergists, anti-foaming agents, synthetic plastics, elastomers, natural or synthetic polymers, and other additives and mixtures thereof.

A proposed aqueous absorbency mechanism of acrylic-based superabsorbent polymers has been described by the Chemdal Corporation (Arlington Heights, Illinois 60004) in their Technical Data Sheets on Aridall® Superabsorbent Polymers. The absorbency of acrylic-based superabsorbent polymers is attributed to carboxylic groups located on the backbone of the superabsorbent polymer. When natural (e.g., via rain, dew, metabolic or physiologic water) or artificial (e.g., via sprinklers, irrigation, etc.) water contacts the superabsorbent polymer, these groups solvate rapidly and develop mutually repulsive negative charges. This allegedly causes the superabsorbent polymer to uncoil and absorb many times its weight in water. Crosslinking prevents solution of the superabsorbent polymer. The aqueous medium rapidly becomes oriented on the surface of the superabsorbent polymer by virtue of hydrogen bonding. The resulting gel has remarkable ability to hold the aqueous medium even under pressure.

Superabsorbent polymers appear to hold fluids by a physico-chemical mechanism. Electrolytes/salts interfere somewhat with the hydrogen bonding and effect the absorbency. Crosslinked acrylic-based superabsorbent polymers always absorb less aqueous medium when electrolytes/salts are present.

It should be noted that viscous/semi-viscous aqueous superabsorbent polymer compositions can be rendered flowable by the use of vigorous or high-shear mixing/agitation. Any suitable equipment or technique used to incorporate insecticides or pesticides into an aqueous emulsion can be suitably used to render a non-flowable superabsorbent-based composition flowable. Inverting oil techniques are also appropriate for mixing and dispensing a highly viscous aqueous superabsorbent polymer composition composed of water, at least one film-forming agent or oil, and with or without other additives. The degree of mixing/agitation of the superabsorbent polymer-base aqueous composition will also have an effect on the bonding of water (i.e., breaking or disrupting) with the superabsorbent polymer matrix.

The specific gravity of the delivery composition can also be adjusted by the use of solid or liquid surfactants, oils, surface active or film-forming agents, water, alcohols, clays, talcs, encapsulation films, or fillers which can for example include viscosity modifiers.

The ratio of superabsorbent polymer(s) to any additive diluent or adjuvant such as a surfactant, oil, surface-active or film-forming agent(s) is from about 0.1:1 to about 100:1. The ratio of superabsorbent polymer to water in a flowable composition is generally 0.001:100 to 1:1.

The comparative rates of natural environmental degradation of powdered superabsorbent polymer-based compositions formulated with and without the 2 mol ethoxylate of isostearyl alcohol (Arosurf® 66-E2) or soybean oil (Table 1), and the subsequent matrix stability (Table 2) were determined on sandy soil/grassy field/pond conditions.

The active agent release potential of a variety of superabsorbent polymer-bait (soybean oil), formulations translocated by fire ant workers into ant mounds were determined in natural field conditions (Table 3). Fire ants were allowed to forage on 20g of a polymer-bait formulation that was scattered around a mound. One soil core sample per mound was chen taken ca. 11 days posttreatment with a PVC pipe [3.175 cm (1-1/4 inch)ID] by driving the pipe into the center of the mound down to a distance of ca. 30.5cm (12 inches). The core was then removed and six, ca. 5cm (2 inch) samples were sequentially removed from the pipe beginning with the lowest depth and placed into a plastic cup of R.O. water (ca. 50 ml). Swelling was used to indicate polymer presence in the mound galleries or chambers and was used as the indicator for depth translocation and matrix stability.

### Reference EXAMPLES I-II

Field evaluations concerning the comparative environmental persistence of technical and Arosurf^{R} 66-E2 - or soybean oil - formulated superabsorbent polymers exposed to natural field conditions are presented in Table 1. Results indicated that a variety of polymer formulations containing Arosurf® 66-E2 or soybean oil persisted in natural habitats subjected to rain, UV, microbial attack, oxidation, etc., significantly longer than technical polymers that were not formulated with these materials. In general, Arosurf^{R} 66-E2 appeared to protect Super Sorb significantly better than soybean oil; however, the Super Sorb-soybean formulation persisted in the field significantly longer than technical Super Sorb. The comparative stability of these environmentally stressed solid superabsorbent polymer formulations of Arosurf® 66-E2 are presented in Table 2. This data (Tables 1 and 2) suggests that various oils, surface-active agents, film-forming agents, or surfactants can be used as a superabsorbent polymer formulation ingredient that can act as a bait and/or as a protective agent to stabilize the polymer matrices, and thereby enhance the field life and persistence in natural habitats for longer periods of time than would be expected with formulations not containing oils, surfactants, surface-active agents, or film-forming agents.

### Reference EXAMPLE III

A series of field evaluations to determine the subsurface translocation of a variety of superabsorbent polymer-based bait (soybean oil) formulations by imported fire ant workers are reported in Table 3. The data indicates that active polymers (i.e., water swellable) were present in the galleries or chambers of fire ant mounds at 11 days posttreatment at varying depths. Observed variations and similarities in subsurface locations among mounds were presumed to be related to polymer types, mound. sizes, ant populations, subsurface soil profiles, and/or to the sample technique.

### Reference EXAMPLE IV

Observation during the course of field evaluations to determine the environmental persistence of several 20g solid (powdered) superabsorbent polymer-base bait/diluent compositions indicated that a formulation composed of Water Lock® A-100 (50%) and soybean oil (50%) was extremely attractive to a wild racoon. Observations of racoon tracks around samples of 50 and 100% eaten polymer formulations indicated the feeding preference/attractiveness of raccoons to superabsorbent polymer-base compositions, and suggested the use of superabsorbent polymer bait-predicide formulations to control unwanted predator populations.

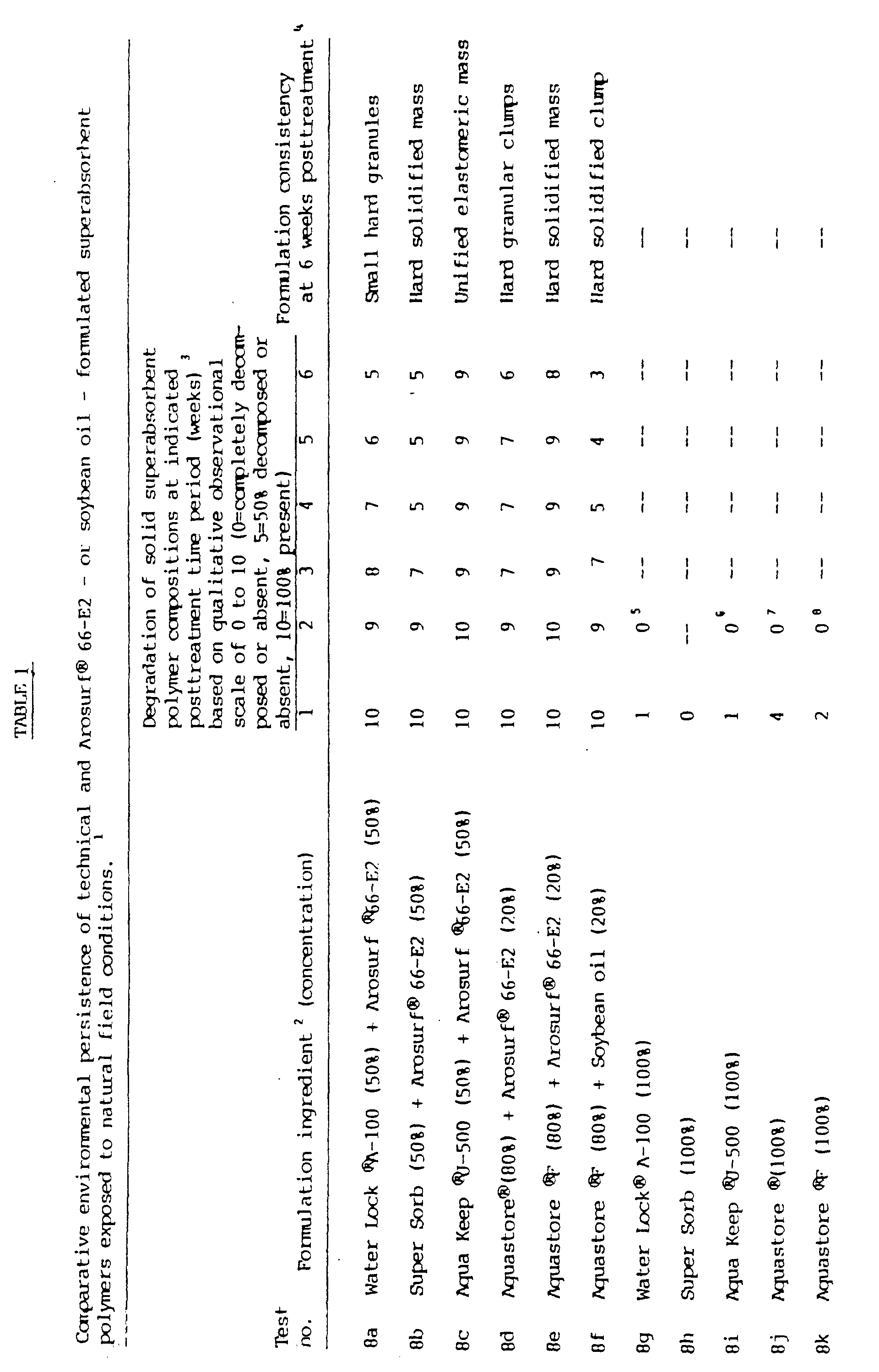

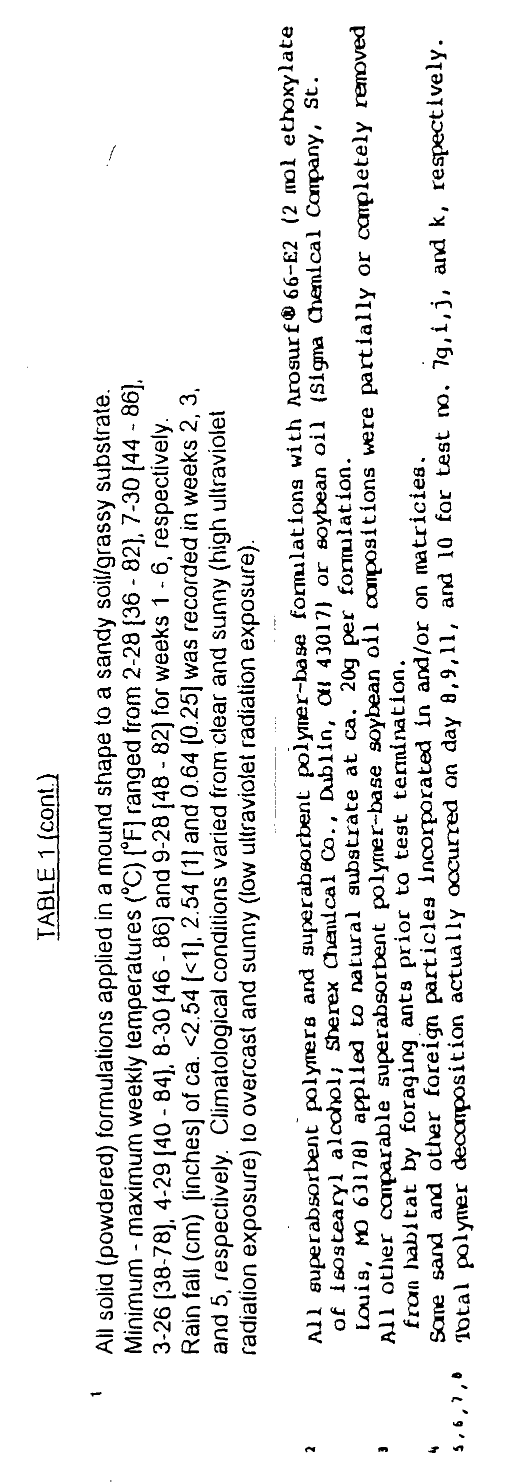

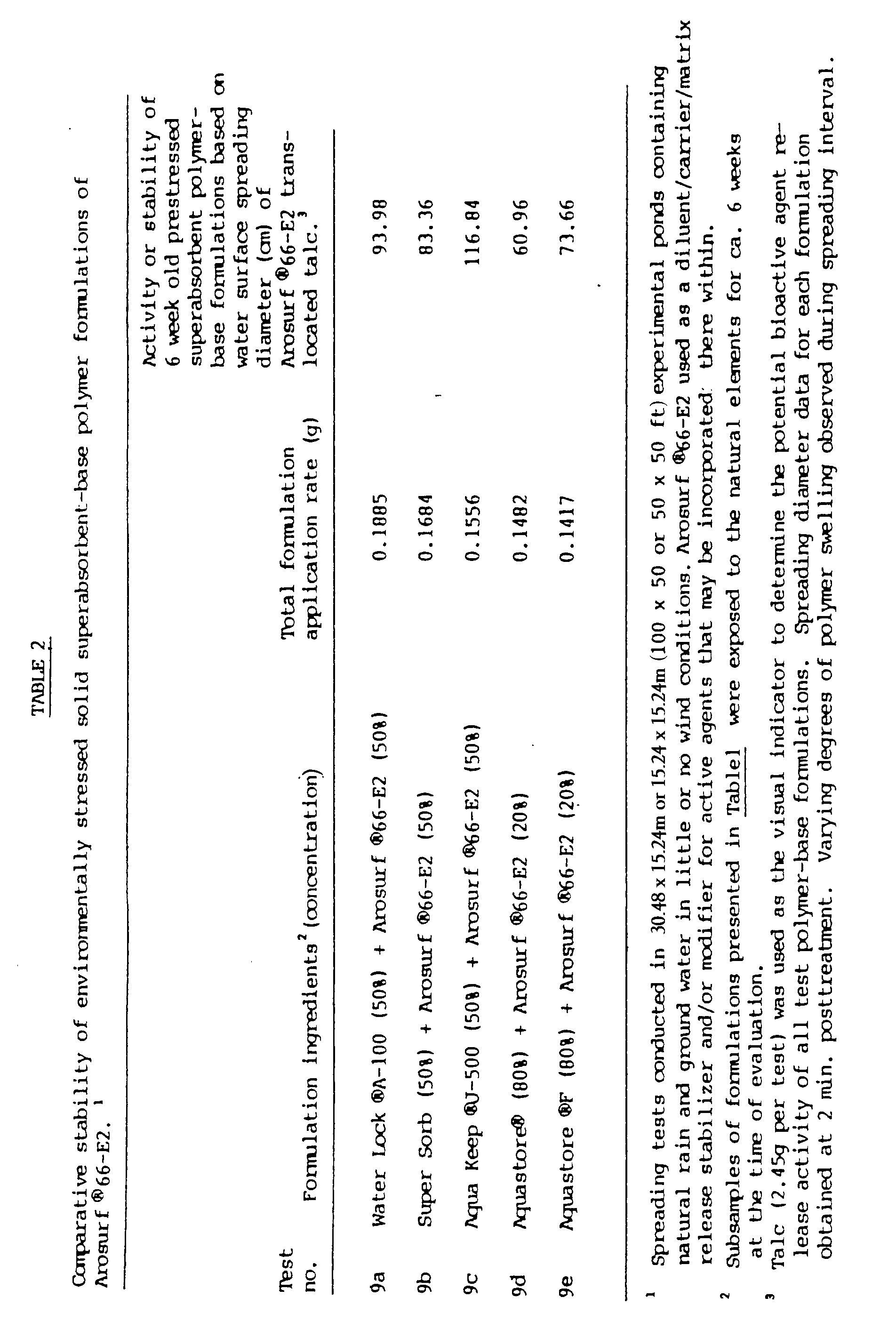

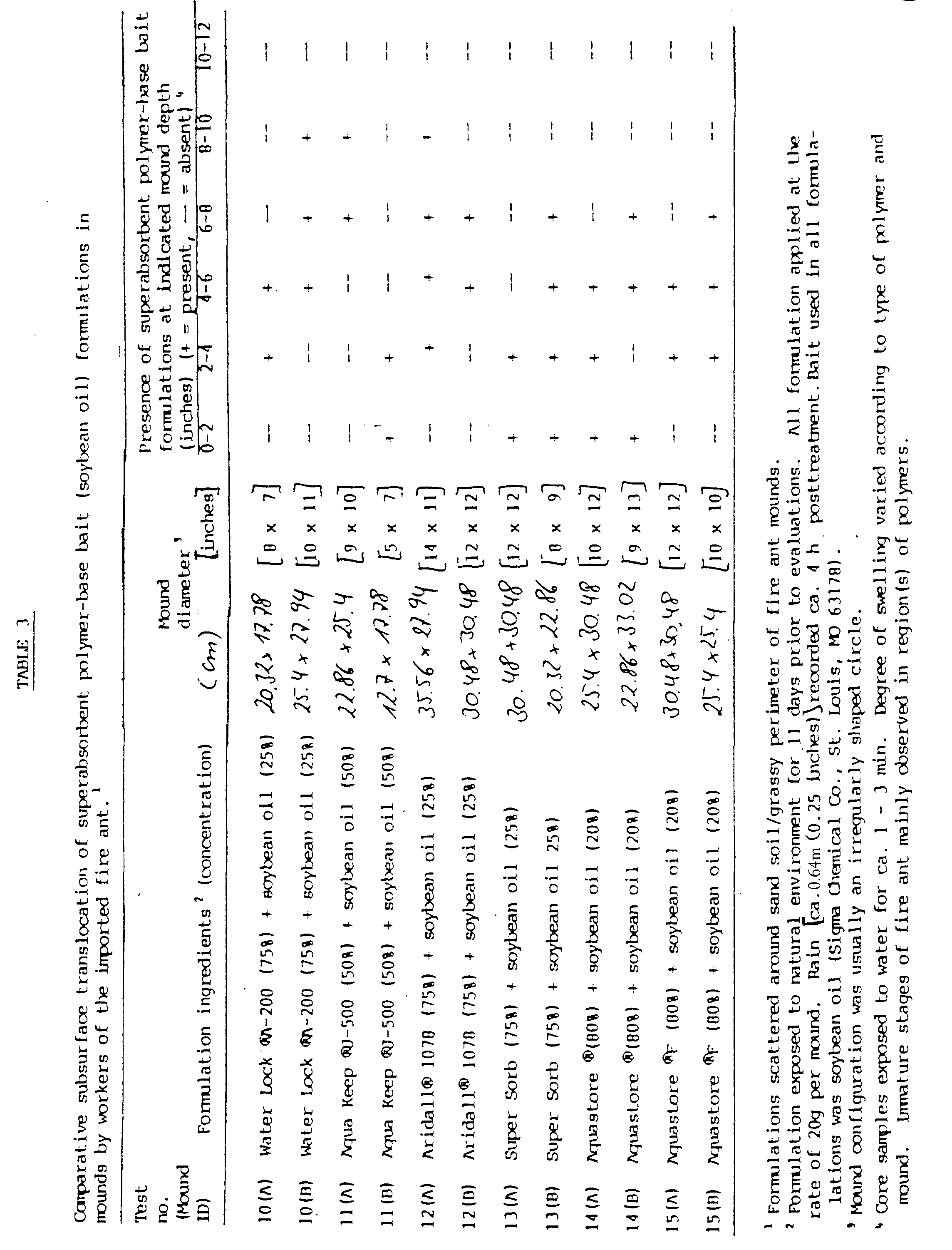

## Claims

1. Use of superabsorbent solid organic polymers which absorb over 100 times their weight in water and which do not contain an insecticidal and/or pesticidal agent for the treatment or pretreatment of active pest breeding areas, provided that mosquitoe breeding areas are excluded.

2. The use of claim 1, wherein said superabsorbent polymer comprises a starch graft co-polymer or ter-polymer on a hydrophilic arcylamide, or acrylate polymer, co-polymer or ter-polymer.

3. The use of claim 1 or 2, wherein said superabsorbent polymer is selected from the group consisting of: an acrylamidesodium acrylate copolymer; a hydrolyzed starch-polyacrylonitrile; hydrolyzed 2-propenenitrile homo-polymer sodium salt or poly(acrylamide-co-sodium acrylate) or poly(2-propeneamide-co-2-propenoic acid, sodium salt); starch-g-poly(acrylonitrile) or starch-g-poly(acrylamide-co-sodium acrylate), a starch-acrylonitrile copolymer; poly-2-propenoic acid sodium salt; poly(2-propoeneamide-co-2-propenoic acid) sodium salt; starch-g-poly(2-propeneamide-co-2-propenoic acid) potassium salt; starch-g-poly(2-propeneamide-co-2-propenoic acid); starch-g-poly(2-propeneamide-co-2-propenoic acid) sodium salt; cellulosic laminates of poly-2-propenoic acid, sodium salt; crosslinked modified polyacrylamide; or crosslinked acrylics; and mixtures thereof.

4. The use of any of claims 1 to 3, wherein said superabsorbent polymer is in a powder, granule, extruded or flake form or agglomerated into any shape or form.

## Patentansprüche

1. Verwendung von superabsorbierenden festen organischen Polymeren, die mehr als das 100fache ihres Gewichts an Wasser absorbieren und kein insektizides und/oder pestizides Mittel enthalten, zur Behandlung oder Vorbehandlung von aktiven Schädlingsbrutstätten, ausgenommen Stechmückenbrutstätten.

2. Verwendung nach Anspruch 1, wobei das superabsorbierende Polymer ein Stärke-Pfropfcopolymer oder -terpolymer auf einem hydrophilen Arcylamid- oder Acrylat-Polymer, Copolymer oder Terpolymer umfaßt.

3. Verwendung nach Anspruch 1 oder 2, wobei das superabsorbierende Polymer ausgewählt ist aus der Gruppe bestehend aus: einem Acrylamid/Natriumacrylat-Copolymer; einem hydrolysierten Stärkepolyacrylnitril; einem hydrolysierten 2-Propennitril-Homopolymer-Natriumsalz oder Poly(acrylamid-co-natriumacrylat) oder Poly(2-propenamid-co-2-propensäure-Natriumsalz); Stärke-g-polyacrylnitril oder Stärke-g-poly(acrylamid-co-natriumacrylat), einem Stärke/Acrylnitril-Copolymer; Poly-2-propensäure-Natriumsalz; Poly(2-propenamid-co-2-propensäure)-Natriumsalz; Stärke-g-poly(2-propenamid-co-2-propensäure)-Kaliumsalz; Stärke-g-poly(2-propenamid-co-2-propensäure); Stärke-g-poly(2-propenamid-co-2-propensäure)-Natriumsalz; Cellulose-Laminaten von Poly-2-propensäure-Natriumsalz; vernetztem modifizierten Polyacrylamid; oder vernetzten Acrylmaterialien und Mischungen derselben.

4. Verwendung nach einem der Ansprüche 1 bis 3, wobei das superabsorbierende Polymer in Pulver-, Granalien-, extrudierter oder Flockenform vorliegt oder in irgendeine Gestalt oder Form agglomeriert ist.

## Revendications

1. Utilisation de polymères organiques solides superabsorbants, qui absorbent plus de 100 fois leur poids en eau et qui ne contiennent pas de produit insecticide ni de produit pesticide, pour le traitement et le pré-traitement de zones propice à la multiplication d'animaux nuisibles actifs, à condition d'exclure les zones à propice à la multiplication de moustiques.

2. Utilisation d'après la revendication 1, dans laquelle le polymère superabsorbant est composé d'un copolymère ou d'un terpolymère d'amidon greffé sur un acrylamide hydrophile, ou un polymère, un copolymère, ou un terpolymère d'acrylate.

3. Utilisation d'après la revendication 1 ou 2, dans laquelle le polymère superabsorbant est sélectionné dans le groupe suivant: un copolymère d'acrylamide/sodium acrylate; un amidon-polyacrylonitrile hydrolysé; homopolymère de 2-propènenitrile hydrolysé, sel de sodium, ou poly(acrylamide-co-sodium acrylate), ou poly(2-propènoamide-co-acide 2-propénoïque, sel de sodium); amidon-g-poly(acrylonitrile) ou amidon-g-poly(acrylamide-co-sodium acrylate), un copolymère amidon-acrylonitrile; poly(acide 2-propénoïque), sel de sodium); poly(2-propènoamide-co-acide 2-propénoïque), sel de sodium; amidon-g-poly(2-propènoamide-co-acide 2-propénoïque), sel de potassium; amidon-g-poly(2-propènoamide-co-acide 2-propénoïque); amidon-g-poly(2-propènoamide-co-acide 2-propénoïque), sel de sodium; lamelles cellulosiques de poly(acide 2-propénoïque), sel de sodium; polyacrylamide modifié réticulé; ou acryliques réticulés, et les mélanges d'entre eux.

4. Utilisation d'après une des revendications de 1 à 3, dans laquelle le polymère superabsorbant est sous forme de poudre, de granules, sous forme profilée ou sous forme extrudée, ou sous forme agglomérée de n'importe quel profil ou de n'importe quelle forme.
